# EUROPEAN PATENT APPLICATION

(11) **EP 2 927 860 A1**
(43) Date of publication of application: **07.10.2015**
(21) Application number: 15162388.1
(22) Date of filing: 02.04.2015
(51) Int. Cl.: G06Q 30/02, H04N 21/44

(54) **DISPLAY APPARATUS, METHOD OF CONTROLLING THE SAME, SERVER, METHOD OF CONTROLLING THE SAME, SYSTEM FOR DETECTING INFORMATION ON LOCATION OF CHANNEL INFORMATION, AND METHOD OF CONTROLLING THE SAME**

(30) Priority: 03.04.2014 KR 20140040126
(71) Applicant: Samsung Electronics Co., Ltd, Gyeonggi-do 443-742 (KR)
(72) Inventor: Choi, Chang-ki, Seoul (KR); Koh, Kwang-hyun, Seoul (KR)
(74) Representative: Appleyard Lees

(57) **Abstract**

Provided are a display apparatus (100), a method of controlling the same, a server (200), a method of controlling the same, a system for detecting information on a display location of channel information, and a method of controlling the same. The method of controlling a display apparatus includes: transmitting, to a server, a request for information on a display location of channel information; receiving, from the server, the information on the display location of the channel information in response to the transmitted request; and extracting the channel information from a screen displayed by the display apparatus based on the received information on the display location of the channel information.

## Description

### BACKGROUND

### 1. Field

Apparatuses and methods consistent with exemplary embodiments relate to a display apparatus, a method of controlling the same, a server, a method of controlling the same, a system for detecting information on a location of channel information, and a method of controlling the same, and more particularly, to a display apparatus that detects channel information easily, a method of controlling the same, a server, a method of controlling the same, a system for detecting information on a location of channel information, and a method of controlling the same.

### 2. Description of the Related Art

In order to create an advertisement that is customized to individual demands and satisfies various customer needs, an advertisement producer assesses a type of contents consumed by users.

A related art Finger Print method relates to a display apparatus, such as a television (TV), which captures a currently displayed screen and transmits the captured screen to an advertisement producer. The advertisement producer is then able to analyze the received captured screen and obtain information on a channel or a program that a user watches. Accordingly, the advertisement producer is able to determine a user preference and make and provide a customized advertisement through the aforementioned processes.

However, in order for the display apparatus to capture a displayed screen and transmit the captured display screen to a server, a large amount of data transmission is performed and a load of hardware of a display apparatus and relevant costs increase.

Accordingly, there is a need for a method which enables a display apparatus to detect channel information expeditiously and easily.

### SUMMARY

The present disclosure has been provided to address the aforementioned and other problems and disadvantages occurring in the related art, and an aspect of the present disclosure provides a display apparatus which detects channel information displayed on a display apparatus easily, a method of controlling the same, a server, a method of controlling the same, a system for detecting information on a location of channel information, and a method of controlling the same.

According to an aspect of an exemplary embodiment, there is provided a method of controlling a display apparatus, the method including: transmitting, to a server, a request for information on a display location of channel information; receiving, from the server, the information on the display location of the channel information in response to the request; and extracting, based on the information on the display location of the channel information, the channel information from a screen displayed by the display apparatus.

The request may include information on a type of a broadcast receiving apparatus connected to the display apparatus, and the information on the display location may include coordinate value information corresponding to the display location of the channel information.

The transmitting may include transmitting the request in response to a channel information displaying event occurring, wherein the channel information displaying event may be at least one of a channel changing event, a power-on event of the display apparatus, an external apparatus connecting event, and a user request receiving event for displaying the channel information.

In response to the channel information not being extracted, the method may further include capturing an image of the screen displayed by the display apparatus and transmitting the captured image of the screen to the server.

The channel information may include at least one of channel number information on a channel displayed by the display apparatus, information on a broadcast company which transmits a content regarding the channel, and a name of the content.

The method may further include storing the information on the display location of the received channel information.

According to an aspect of another exemplary embodiment, there is provided a display apparatus including: a display configured to display a content; a communicator configured to communicate with an external server; and a controller configured to control the communicator to transmit, to a server, a request for information on a display location of channel information, the communicator being configured to receive, from the server, the information on the display location of the channel information in response to the request, and extract the channel information from a screen displayed by the display based on the information on the display location of the channel information.

The request may include information on a type of a broadcast receiving apparatus connected to the display apparatus, wherein the information on the display location may include coordinate value information corresponding to the display location of the channel information.

The apparatus may further include a user input interface, wherein in response to a channel information displaying event occurring, the controller may control the communicator to transmit the request, and the channel information displaying event may be at least one of a channel changing event, a power-on event of the display apparatus, an external apparatus connecting event, and a user request receiving event for displaying the channel information.

In response to the channel information not being extracted, the controller may control the communicator to capture an image of the screen displayed by the display apparatus and transmit the captured image of the screen to the server.

The channel information may include at least one of channel number information on a channel displayed by the display apparatus, information on a broadcast company which transmits a content regarding the channel, and a name of the content.

The apparatus may further include a storage configured to store the received information on the display location of the channel information.

According to an aspect of another exemplary embodiment, there is provided a method of controlling a server, the method including: receiving, from a display apparatus, a request for information on a display location of channel information; analyzing the request; and transmitting the information on the display location of the channel information to the display apparatus according to a result of the analyzing.

The method may further include receiving a captured image of a display screen from the display apparatus and analyzing the received screen, determining the display location of the channel information, and updating the information on the display location of the channel information.

According to an aspect of another exemplary embodiment, there is provided a server, the server including: a communicator; and a controller configured to control the communicator to receive a request for information on a display location of channel information, to analyze the request, and to control the communicator to transmit, to the display apparatus, the information on the display location of the channel information according to a result of the analyzing.

The controller may control the communicator to receive a captured image of a display screen from the display apparatus, may determine the display location of the channel information by analyzing the received screen, and may update the information on the display location of the channel information.

According to an aspect of another exemplary embodiment, there is provided a method of controlling a system for detecting information on a display location of channel information, the method including: transmitting, to a server by a display apparatus, a request for information on a display location of channel information; analyzing, by the server, the request and transmitting, by the server to the display apparatus, the information on the display location of the channel information according to a result of the analyzing; and extracting, by the display apparatus, the channel information from a screen displayed by the display apparatus based on the information on the display location of the channel information.

According to an aspect of another exemplary embodiment, there is provided a system for detecting information on a display location of channel information, the system including: a display apparatus configured to transmit, to a server, a request for information on a display location of channel information; and a server configured to analyze the request and to transmit, to the display apparatus, the information on the display location of the channel information according to a result of the analyzing, wherein the display apparatus extracts the channel information from a display screen based on the information on the display location received from the server.

According to an aspect of another exemplary embodiment, there is provided a method of controlling a display apparatus, the method including: obtaining, by the display apparatus, information on a display location of channel information displayed by the display apparatus; and extracting, based on the obtained information on the display location of the channel information, the channel information from a screen displayed by the display apparatus.

According to various exemplary embodiments, a display apparatus may extract channel information displayed on a same screen as channel number expeditiously and easily.

### BRIEF DESCRIPTION OF THE DRAWINGS

The above and/or other aspects will be more apparent by describing exemplary embodiments with reference to the accompanying drawings, in which:
FIG. 1 is a diagram illustrating a system for detecting information on a location of channel information according to an exemplary embodiment;
FIG. 2 is a block diagram illustrating a structure of a display apparatus according to an exemplary embodiment;
FIG. 3 is a diagram illustrating a structure of a server according to an exemplary embodiment;
FIG. 4 is a diagram illustrating a display screen including channel information according to an exemplary embodiment;
FIG. 5 is a diagram illustrating a setting screen of a display apparatus according to an exemplary embodiment;
FIG. 6 is a diagram illustrating information on a location of channel information stored in a server according to an exemplary embodiment;
FIG. 7 is a diagram illustrating a channel information detecting location of a display apparatus according to an exemplary embodiment;
FIG. 8 is a flowchart provided to describe a method of controlling a display apparatus according to an exemplary embodiment;
FIG. 9 is a flowchart provided to describe a method of controlling a server according to an exemplary embodiment; and
FIG. 10 is a sequence diagram provided to describe a method of detecting information on a location of channel information according to an exemplary embodiment.

### DETAILED DESCRIPTION OF EXEMPLARY EMBODIMENTS

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail. As used herein, the term "and/or" includes any and all combinations of one or more of the associated listed items. Furthermore, as used herein, expressions such as "at least one of," when preceding a list of elements, modify the entire list of elements and do not modify the individual elements of the list.

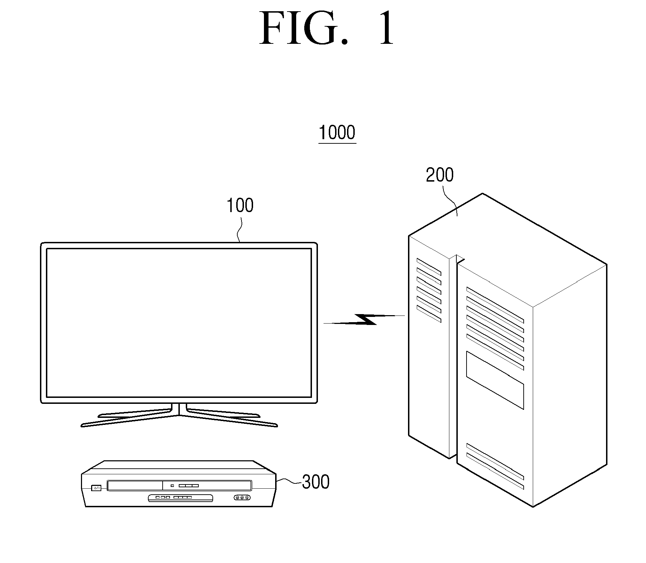

FIG. 1 is a diagram illustrating a system 1000 for detecting information on a display location of channel information according to an exemplary embodiment. As shown in FIG. 1, the system 1000 for detecting information on a display location of channel information may include a display apparatus 100, a server 200, and a broadcast receiving apparatus 300 such as a set-top box.

In this case, the display apparatus 100 may be a television (TV), although it is understood that one or more other exemplary embodiments are not limited thereto. The display apparatus 100 may be embodied as various electronic apparatuses including a display, such as a mobile phone, a Personal Computer (PC), a tablet PC, a digital camera, a camcorder, a laptop PC, a Personal Digital Assistant (PDA), a monitor, a portable multimedia player, etc.

The server 200 may communicate with the display apparatus 100 in a wired or wireless manner and store information on a display location of channel information included in a screen displayed by the display apparatus 100.

The broadcast receiving apparatus 300 may be an apparatus provided by or corresponding to a broadcast company or a content provider and may vary depending upon the broadcast company or the content provider. In addition, the broadcast receiving apparatus 300 may be any device that receives content, such as a third-party device that may receive streaming multimedia content, or content from a particular broadcast company by using a device or module, such as a decryption key, a cable card, etc. In the case of the broadcast receiving apparatus 300 provided by the same broadcast company or the content provider, the broadcast receiving apparatus 300 may vary depending upon a location where the broadcast receiving apparatus 300 is provided or a time when the broadcast receiving apparatus 300 is provided.

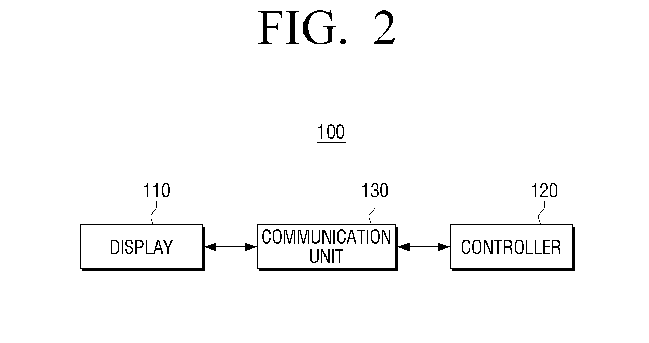

FIG. 2 is a block diagram illustrating a structure of the display apparatus 100 according to an exemplary embodiment. As shown in FIG. 2, the display apparatus 100 includes a display 110, a communication unit 130 (e.g., a communicator), and a controller 120.

FIG. 2 shows a display apparatus 100 that may be provided with various operations, such as an Optical Character Recognition (OCR) operation, an operation of extracting channel information, an operation of saving to a Random Access Memory (RAM) or saving to a disk, a communication operation, a video playback operation, a display operation, etc., as an example. Thus, according to an exemplary embodiment, the components shown in FIG. 2 may be partially omitted or modified, and one or more other components may be added.

The display 110 is a component for displaying an image. The display 110 may display a content received through a broadcast channel. That is, the display 110 may receive various broadcast signals transmitted from a broadcast station through a Radio Frequency (RF) communication network and/or may receive content from various servers through an Internet Protocol (IP) network. The display 110 may display the received content. For example, the display 110 may display the received content received through the broadcast receiving apparatus 300 such as a set-top box. The display 110 may include a liquid crystal display (LCD), a plasma display panel (PDP), a cathode ray tube (CRT) display, a light emitting diode (LED) display, an organic LED (OLED) display, an active-matrix OLED (AMOLED) display, a super AMOLED display, an in-plane switching (IPS) display, a thin-film-transistor (TFT) display, etc.

The communication unit 130 is a component that communicates with various types of external apparatuses according to various types of communication methods. In particular, the communication unit 130 may communicate with the server 200 that is external to the display apparatus 100.

That is, the communication unit 130 may transmit a request signal for requesting information on a display location of channel information displayed through the display 110 to the server 200. In addition, the communication unit 130 may receive the information on the display location of the channel information from the sever 200.

The request signal may be a signal including information on a type of the broadcast receiving apparatus 300 that is connected to the display apparatus 100, a channel information displaying event, etc. In addition, the information on the display location may include coordinate value information indicating the display location of the channel information.

In particular, in response to a channel information displaying event occurring, the communication unit 130 may transmit the request signal. The channel information displaying event may be any of various events for displaying information related to a display screen, such as a channel changing event, a power-on event of the display apparatus, an external apparatus connecting event, a user request receiving event for displaying the channel information, etc.

The display apparatus 100 may include a user input unit (e.g., user input interface) and may receive a power on/off command or a user request through the user input unit.

The user input unit may be embodied as a remote controller including an OK or enter key and a four-directional key in up, down, left, and right directions, although it is understood that this configuration is merely an example and one or more other exemplary embodiments are not limited thereto. The user input unit may be embodied as various input devices such as a touch screen, a mouse, a pointing device, etc.

The server 200 may be an independent server that is disposed outside of the display apparatus 100, although it is understood that one or more other exemplary embodiments are not limited thereto. For example, the server 200 may be embedded in the display apparatus 100.

The communication unit 130 may include various communication chips such as a Wi-Fi chip, a Bluetooth chip, a Near Field Communication (NFC) chip, a wireless communication chip, etc. In this case, each of the Wi-Fi chip, the Bluetooth chip, and the NFC chip performs communication in a Wi-Fi method, a Bluetooth method, and a NFC method, respectively. The NFC chip may refer to a chip that operates in an NFC method using a frequency band of 13.56 MHz from among various Radio Frequency-Identification (RF-ID) frequency bands including 135 kHz, 13.56 MHz, 433 MHz, 860 to 960 MHz, 2.45 GHz, etc. In the case of the Wi-Fi chip or the Bluetooth chip, various items of connection information, such as Subsystem Identification (SSID) and a session key, are transmitted and received, and then various items of information may be transmitted and received through communication established by using the connection information. The wireless communication chip refers to a chip that performs communication according to various communication standards such as Institute of Electrical and Electronics Engineers (IEEE), Zigbee, 3rd Generation (3G), 3rd Generation Partnership Project (3GPP), Long Term Evolution (LTE), etc. Additionally, it is understood that in one or more other exemplary embodiments, the communication unit 120 may include components for performing a wired communication (e.g., an Ethernet communication).

The controller 120 may control overall operations of the display apparatus 100. In particular, the controller 120 may extract channel information from a screen displayed through the display 110 based on the information on the display location of the channel information received through the communication unit 130.

In addition, the display apparatus 100 may store the information on the display location of the channel information according to a type of the broadcast receiving apparatus 300, which varies depending upon a broadcast company or a content provider, in a storage in a form of a table. The storage may be internal or external to the display apparatus 100. Accordingly, the controller 120 may determine the broadcast receiving apparatus 300 that is connected to the display apparatus 100 and extract the channel information from a screen by using the information on the display location of the channel information that is stored in the storage in, for example, the form of the table, according to a determined result.

The display location of the channel information is typically an area of the display screen 110, smaller than the full screen, in which channel information is displayed on the particular display screen according to the information retrieved from the server 200. Channel information can be displayed temporarily on the display 110.

According to another exemplary embodiment, the display apparatus 100 may store the information on the display location of the channel information according to a channel information displaying event. That is, in this case, the display location of the channel information may vary according to the channel information displaying event. As such, the storage may store the display location according to both the channel information displaying event and the broadcast company or the content provider.

Furthermore, the controller 120 may control to capture an image of a screen displayed through the display 110. In addition, the controller 120 may extract the channel information from the captured image based on the information on the display location of the channel information received through the communication unit 130 or previously stored in the storage. According to another exemplary embodiment, the controller 120 may control to capture an image of only an area of the screen defined by the information on the display location. Here, the controller 120 may extract the channel information directly from the captured image or may transmit the captured image (which is of less size than an image of the entire screen) to a server (e.g., advertiser's server) to extract the channel information.

The channel information may include at least one of various pieces of information related to a content displayed by the display apparatus 100, such as channel number information of a channel displayed through the display 110 by the display apparatus 100, information on a broadcast company that transmits a content regarding the channel, a name of the content, etc.

To extract channel information, various methods of recognizing a text may be used. For example, the controller 120 may extract the channel information by implementing an OCR operation.

Specifically, the controller 120 may use a coordinate value included in the information on the display location received from the server 200 and may perform an OCR operation with respect to only an area within or based on (e.g., larger or smaller by a predetermined amount) the coordinate value out of the screen displayed through the display 110. Accordingly, the display apparatus 100 may extract the channel information expeditiously and precisely. Subsequently, the display apparatus 100 may transmit the extracted channel information to an external device, e.g., an advertiser's server.

Meanwhile, in response to the channel information not being extracted from the captured image, the controller 120 may control to capture the entire screen (or a portion thereof) displayed through the display 110. In addition, the controller 120 may control the communication unit 130 to transmit the captured screen to the server 200. In this case, the controller 120 may transmit the captured screen to the server 200 so that the server 200 can update the information on the location of the channel information, and/or so the server 200 can determine and provide the channel information.

The storage may store the information on the display location of the channel information received through the communication unit 130. That is, the storage stores the information on the display location of the channel information received from the server 200. Thus, in response to the display apparatus 100 using or desiring information on the same location, the display apparatus 100 may not perform unnecessary communication with the server 200.

Before transmitting a request signal to the server 200, the controller 120 may search the storage (e.g., the table) for the display location of the channel information or may determine whether the storage stores the display location prior to any such search. In response to determining that the information on the display location is not stored in the storage, or in response to appropriate channel information not being extracted despite an extracting operation according to the searched information, the controller 120 may transmit a request signal to the server 200.

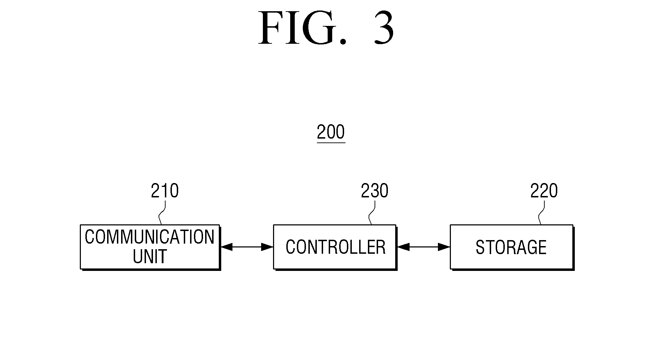

FIG. 3 is a diagram illustrating a structure of the server 200 according to an exemplary embodiment. As shown in FIG. 3, the server 200 may include a communication unit 210 (e.g., communicator), a storage 220, and a controller 230.

The communication unit 210 is a component that communicates with an external apparatus connected to the server 200 in a wired manner on in a wireless manner. Specifically, the communication unit 210 may receive a request signal for requesting the information on the display location of the displayed channel information from the display apparatus 100. The communication unit 210 may include various communication chips such as a Wi-Fi chip, a Bluetooth chip, a Near Field Communication (NFC) chip, a wireless communication chip, etc. Additionally, it is understood that in one or more other exemplary embodiments, the communication unit 210 may include components for performing a wired communication (e.g., an Ethernet communication).

The request signal may be a signal including information on a type of the broadcast receiving apparatus 300 that is connected to the display apparatus 100. Accordingly, the server 200 may determine a broadcast company or a content provider that provides a content to the display apparatus 100 based on the received request signal and may additionally determine a provider or a version of the broadcast receiving apparatus 300.

Thus, the server 200 may determine the information on the display location of the channel information differently depending upon a type of the broadcast receiving apparatus 300.

In addition, in response to the information on the display location of the channel information being determined by the server 200, the sever 200 may transmit a result of the determination (i.e., the information on the display location of the channel information) to the display apparatus 100 through the communication unit 210.

The storage 220 is a component that stores the information on the location determined or previously obtained by the server 200. For example, in response to receiving, from the display apparatus 100 connected to an apparatus provided by a broadcast company or a content provider, a request signal, the server 200 may determine the information on the location corresponding to the apparatus, from among a plurality of information on a plurality of locations corresponding respectively to a plurality of different types of apparatuses. Accordingly, the server 200 may transmit the corresponding information on the location that is pre-stored in the storage 220 to the display apparatus 100 expeditiously.

The controller 230 controls overall operations of the server 200. Specifically, the controller 230 may analyze the request signal received from the display apparatus 100. That is, the controller 230 may determine a type of the broadcast receiving apparatus 300 connected to the display apparatus 100 by analyzing the request signal. In addition, the controller 230 may determine the information on the display location of the channel information according to the type of the broadcast receiving apparatus 300 and transmit the information to the display apparatus 100. By way of example, the information on the location may include coordinate value information corresponding to the display location of the channel information.

The controller 230 may control the communication unit 210 to receive a captured display screen transmitted from the display apparatus 100. In addition, the controller 230 may control the storage 220 to determine and to store the display location of the channel information by analyzing the received, captured display screen.

Specifically, in response to the information on the display location of the channel information corresponding to the received request signal not being stored in the storage 220, the controller 230 may receive a screen (or a captured image thereof) displayed by the display apparatus 100 through the communication unit 210.

Alternatively, in response to receiving a reply that an extracting operation of the channel information by the display apparatus 100 using the received information on the display location fails, the controller 230 may receive a captured display screen from the display apparatus 100, that is the full screen.

The controller 230 may analyze the received display screen by using various operations such as a text recognition operation and the like. For example, the controller 230 may extract the information on a location in which the channel information is included from the received display screen by using the OCR operation.

However, using the text recognition operation such as the OCR operation is merely an example. That is, in various other exemplary embodiments, various methods may be used for extracting the information on a location in which the channel information is located from a display screen.

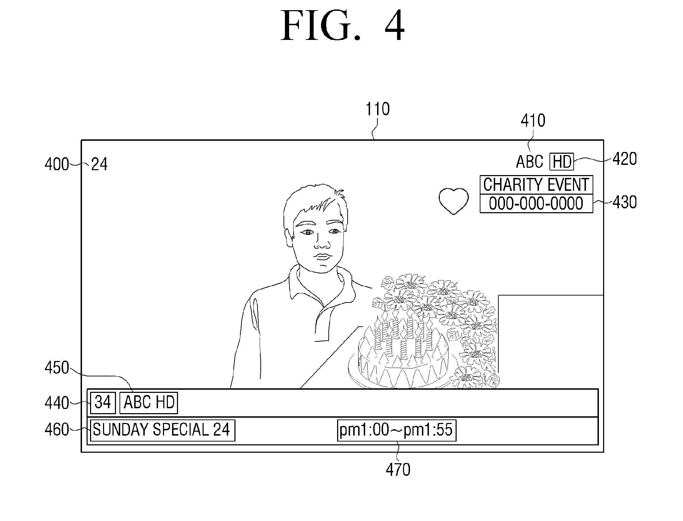

Hereinafter, a method of extracting information on a location is described in detail with reference to FIGS. 4 to 7.

FIG. 4 is a diagram illustrating a display screen displayed on the display apparatus 100 according to an exemplary embodiment. The display apparatus 100 may display channel information related to displayed content as well as a received broadcast content.

Specifically, as shown in FIG. 4, the display 110 may display the channel information such as content title-related information 400, a name of a broadcast company providing a content 410, information related to resolution of the provided content 420, information related to an event including a charity event conducted by a broadcast company 430, etc.

In addition, the display 110 may display Electronic Program Guide (EPG) information on a predetermined location. The EPG information may include a number of a channel providing a content 440, information related to a name of a broadcast company providing a content and the resolution of the provided content 450, a content title 460, and a content providing time 470, although it is understood that one or more other exemplary embodiments are not limited thereto. The EPG information may include specific and various information, such as a synopsis, a character, a director, an age limit, and the like of a content.

In addition, the channel information displayed by the display 110 may be displayed continuously while a certain content is played back or may be displayed for a predetermined time only. For example, in response to receiving a user request for displaying a channel change signal or channel information, the channel information, such as the EPG information, may be displayed for a predetermined time and disappear.

In order for the display apparatus 100 to extract channel information from a screen such as that illustrated in FIG. 4, a large amount of time may be required, or a resource of the display apparatus 100 may be depleted while an analyzing operation is performed.

Accordingly, the display apparatus 100 may perform text recognition with respect to a corresponding location only by using the information on the display location of the channel information stored in the storage or received via the communication unit 130.

Meanwhile, in response to the information on the location not being stored in the storage or in response to not detecting the channel information despite the text recognition being performed using the information stored in the storage, the display apparatus 100 may transmit a request for information on a location to the server 200.

Specifically, the display apparatus 100 may transmit a request signal including information on a type of the broadcast receiving apparatus 300. That is, a location in which the channel information, such as the EPG information, is displayed may vary depending upon the broadcast receiving apparatus 300, and thus, the display apparatus 100 transmits a request signal including the information on the type of the broadcast receiving apparatus 300 to the server 200.

Meanwhile, the request signal may be transmitted by the broadcast receiving apparatus 300 connected to the display apparatus 100, instead of the display apparatus 100, to the server 200. Alternatively, the request signal may be transmitted from a user input device, such as a remote controller, of the display apparatus 100 and/or the broadcast receiving apparatus 300 to the server 200. For example, in response to receiving, via a remote controller, a user request for changing a channel, turning on/off of power of the display apparatus 100, or displaying channel information, the remote controller may transmit a request signal to the server 200. Alternatively or additionally, the remote controller may transmit a signal regarding an input to the display apparatus 100, and the display apparatus 100 that receives the signal regarding the input may transmit a request signal to the server 200.

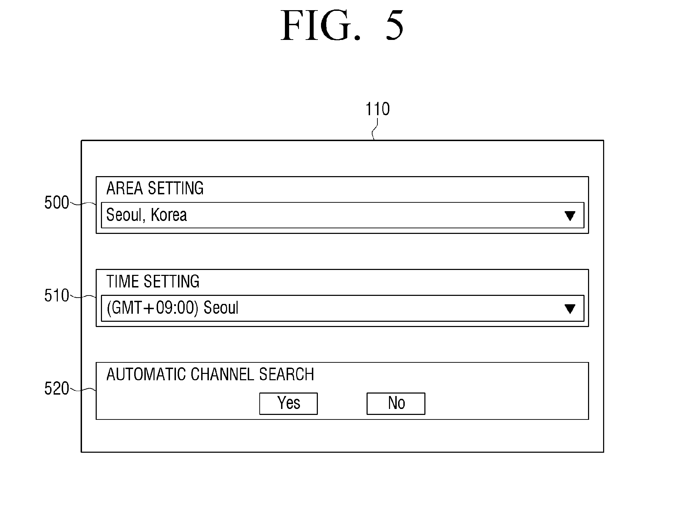

The information on the type of the broadcast receiving apparatus 300 may be inputted to the display apparatus 100 in various methods. For example, as shown in FIG. 5, the display apparatus 100 may perform an area setting 500, a time setting 510, and an automatic channel search 520 in an initial setting stage and may set a type of the broadcast receiving apparatus 300 provided in the corresponding area. Alternatively, the display apparatus 100 may receive information on a business operator or a type of the broadcast receiving apparatus through the broadcast receiving apparatus 300.

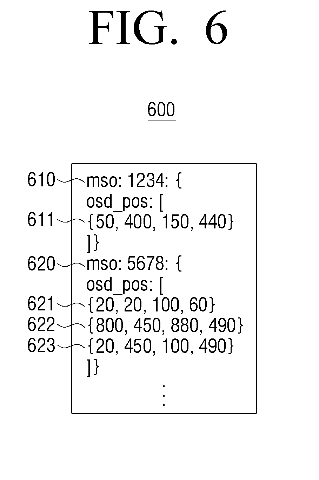

The server 200 may analyze the request signal received from the display apparatus 100 and transmit information on a location 600, such as that illustrated in FIG. 6, to the display apparatus 100.

The information on the location 600 may include information 610, 620 on the broadcast receiving apparatus 300 that varies depending upon a broadcast company or a content provider. For example, the information on the location 600 may include a serial number of the broadcast receiving apparatus 300.

In addition, the information on the location 600 may include locations including channel information 611, 621, 622, 623 in a form of a coordinate value according to each broadcast receiving apparatus 300. In particular, the channel information may be a channel number, and the information on the location 600 may be coordinate value information on a part in which the channel number is located in a screen.

In addition, the information on the location 600 may include the single coordinate value 611 of one location with respect to a single broadcast receiving apparatus 610 but may also include the coordinate values 621, 622, 623 of a plurality of locations with respect to the single broadcast receiving apparatus 620.

To be specific, the server 200 may receive a broadcast content screen received through the broadcast receiving apparatus 620 from the display apparatus 100 and extract the coordinate value 621 regarding an initial location by analyzing the received screen.

Accordingly, in response to receiving, from the display apparatus 100, a request signal regarding the broadcast receiving apparatus 620, information on a location including the coordinate value 621 of the initial location may be transmitted.

Meanwhile, in response to the display apparatus 100 failing to extract the channel information by using the coordinate value 621 regarding the received location, that is, in response to the display apparatus 100 failing to extract the channel information despite execution of the text recognition operation with respect to a part corresponding to the coordinate value 621 of the received location, the server 200 may receive a full display screen including channel information from the display apparatus 100.

In addition, the server 200 may extract the coordinate value 622 of a second location by analyzing the received display screen. The server 200 may update the information on the location 600 so that the information on the location 600 includes the coordinate value 622 of the second location.

By the aforementioned manner, the server 200 may update information on a location for extracting the channel information according to the broadcast receiving apparatus 300.

In response to receiving, from the server 200, information on a location including a plurality of coordinate values regarding a plurality of locations, the display apparatus 100 may perform the text recognition operation, such as the OCR, at one time or sequentially with respect to areas corresponding to the plurality of received coordinate values.

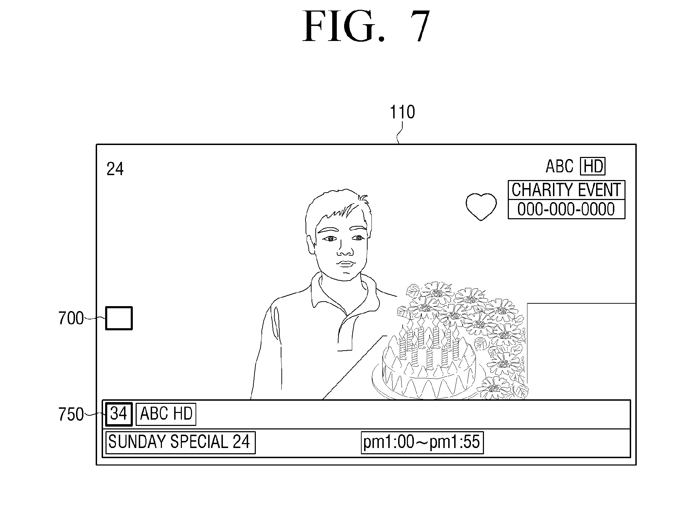

For example, in response to receiving information on a location including coordinate values of two locations, as shown in FIG. 7, the display apparatus 100 may perform the text recognition operation in a first area 700 and a second area 750 respectively corresponding to two coordinate values.

The display apparatus 100 may extract the channel information from both a first area 700 and a second area 750, or from only one area among the first area 700 and the second area 750.

Meanwhile, in response to channel information not being extracted from the first area 700 and the second area 750, or in response to other information than the desired information on a channel number being extracted, the display apparatus 100 may capture a full screen and transmit the captured screen to the server 200. In this case, the server 200 may update information on a new location by analyzing the captured screen.

By the aforementioned display apparatus 100 and server 200, channel information that is displayed temporarily by the display apparatus 100 may be extracted expeditiously and easily. In addition, the display apparatus 100 may provide a user with a recommended channel, a recommended broadcast, and the like by using information such as a channel number extracted from the display apparatus 100. In addition, an audience research may be performed easily by using the channel number extracted from each of plural display apparatuses 100.

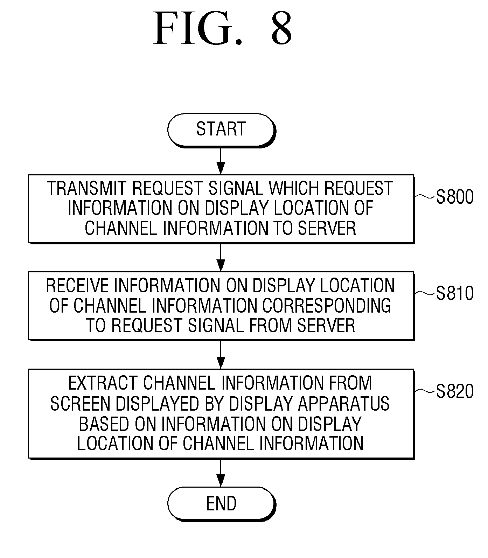

FIG. 8 is a flowchart provided to describe a method of controlling a display apparatus according to an exemplary embodiment.

Referring to FIG. 8, the display apparatus 100 transmits a request signal that requests information on a display location of channel information to a server (operation S800). The request signal may be a signal including information on a type of the broadcast receiving apparatus 300 connected to the display apparatus 100.

The display apparatus 100 receives the information on the display location of the channel information from the server 200 in response to the request signal (operation S810). The information on the location may include coordinate value information corresponding to the display location of the channel information. That is, the display apparatus 100 may obtain the coordinate value information regarding an area in which the channel information is located in a screen from the server 200.

In addition, the display apparatus 100 extracts the channel information from a display screen displayed based on the information of the display location of the channel information (operation S820).

Various text recognition methods may be used for extracting the channel information. For example, the display apparatus 100 may extract the channel information by using the OCR operation.

To be specific, by using a coordinate value included in the information on the location received from the server, the display apparatus 100 may perform the OCR operation with respect to only an area within the coordinate value out of the captured screen. Accordingly, the display apparatus 100 may extract the channel information, such as a channel number, expeditiously and precisely with a reduced processing load.

In order to extract the channel information, the display apparatus 100 may capture a displayed screen. That is, the display apparatus 100 may extract the channel information by using the received information on the location from the captured screen.

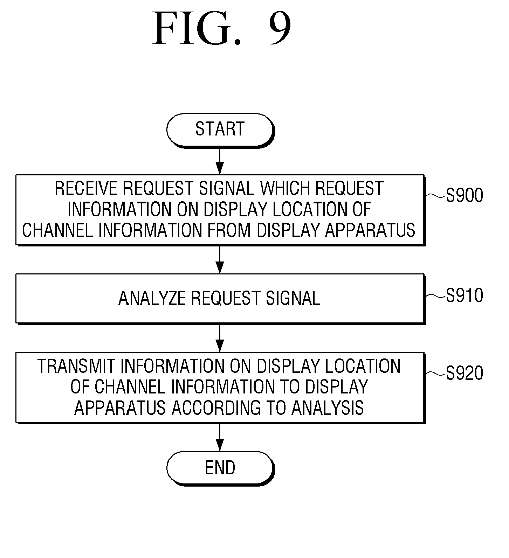

FIG. 9 is a flowchart provided to describe a method of controlling a server according to an exemplary embodiment.

Referring to FIG. 9, the server 200 receives a request signal that requests information on a display location of channel information (operation S900).

The channel information may include at least one of various pieces of information related to a content displayed by the display apparatus 100, such as channel number information of a channel displayed by the display apparatus, information on a broadcast company which transmits a content regarding the channel, a name of the content, a genre or type of the content, a resolution of the content, etc.

The server 200 analyzes the received request signal (operation S910). The request signal may be a signal including information on the type of the broadcast receiving apparatus 300 connected to the display apparatus 100. Accordingly, the server 200 may determine a broadcast company or a content provider that provides a content to the display apparatus 100 based on the received request signal and may determine at least one of a provider, a version, a model, etc., of the broadcast receiving apparatus 300. Accordingly, the server 200 may determine the information on the display location of the channel information differently depending upon the type of the broadcast receiving apparatus 300.

In addition, the server 200 transmits the information on the display location of the channel information to the display apparatus according to a result of the analysis (operation S920). The information on the location may include coordinate value information corresponding to the display position of the channel information.

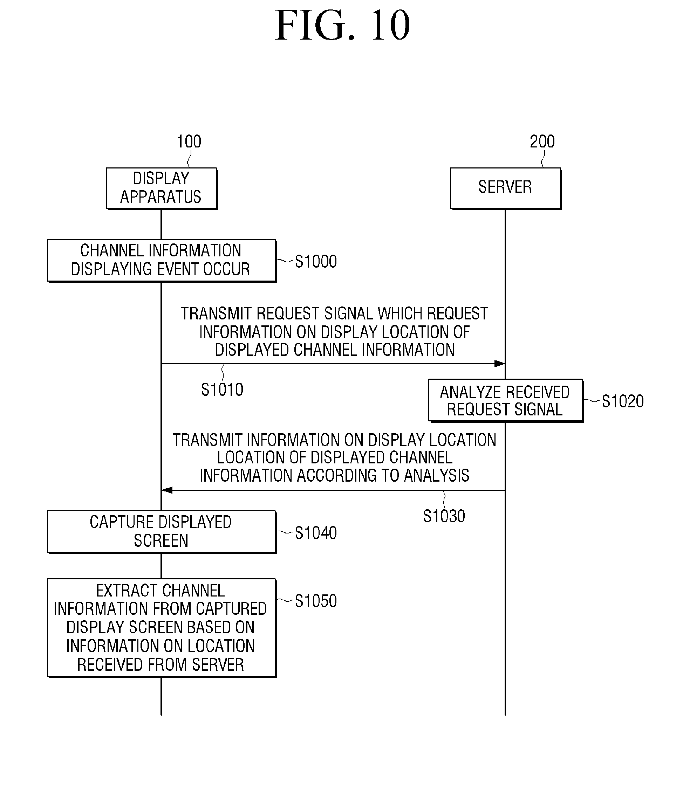

FIG. 10 is a sequence diagram provided to describe a method of detecting information on a location of channel information according to an exemplary embodiment.

Referring to FIG. 10, in response to a channel information displaying event occurring (operation S1000), the display apparatus 100 transmits a request signal that requests information on a display location of displayed channel information (operation S1010).

The channel information displaying event may be various events for displaying information related to a display screen, such as a channel changing event, a power-on event of the display apparatus 100, an external apparatus connecting event, a user request receiving event for displaying the channel information, etc.

The request signal may be a signal including information on the type, the model, etc., of the broadcast receiving apparatus 300 connected to the display apparatus 100.

The server 200 analyzes the received request information (operation S1020) and transmits information on a display location of channel information according to an analysis (operation S1030). The information on the location may include coordinate value information corresponding to or indicating the display location of the channel information.

That is, the server 200 may determine a broadcast company or a content provider that provides a content to the display apparatus 100 based on the received request signal and may determine a provider or a provision version of the broadcast receiving apparatus 300. Accordingly, the server 200 may determine the information on the display location of the channel information differently depending upon a type of the broadcast receiving apparatus 300 and may transmit the information to the display apparatus 100.

The display apparatus 100 captures a displayed screen (operation S1040) and extracts the channel information from the captured display screen based on the information on the location received from the server 200 (operation S1050). Here, the display apparatus 100 may use the information on the location directly received from the server 200, or previously received from the server 200 and stored.

Various text recognition methods may be used to extract the channel information. For example, the display apparatus 100 may extract the channel information by using the OCR operation.

Specifically, by using a coordinate value included in the information on the location received from the server 200, the display apparatus 100 may perform the OCR operation with respect to only an area within the coordinate value out of the captured screen. Accordingly, the display apparatus 100 may extract the channel information, such as a channel number, expeditiously and precisely.

Meanwhile, in response to the channel information not being extracted, the display apparatus 100 may transmit the captured screen to the server 200. That is, the display apparatus 100 may transmit the captured screen to the server 200 so that the server 200 can determine the location of the channel information and/or update the information on the location.

By the aforementioned system 1000, the display apparatus 100 may extract the channel information displayed on the screen, such as a channel number, expeditiously and easily.

While the aforementioned exemplary embodiments are described with reference to channel information that respectively corresponds to the type of the broadcast receiving apparatus 300, it is understood that one or more other exemplary embodiments are not limited thereto. For example, according to another exemplary embodiment, the location of the channel information may be determined to correspond to a particular format, standard, etc., for displaying channel information. In this case, the request signal transmitted to the server 200 may include information based on which the server 200 can determine the corresponding display location of the channel information. According to another exemplary embodiment, the location of the channel information may be determined to correspond to a particular channel information displaying event. For example, the location of the channel information may differ based on different channel information displaying events. Here, the request signal may include information indicating a particular channel information displaying event, and the server 200 may provide the display location of the channel information corresponding to the particular channel information displaying event. Alternatively, the request signal may be the same as or similar to that described above with reference to FIGS. 2 and 8, and the server 200 may provide a plurality of coordinate values or display location information corresponding respectively to the different channel information displaying events, and the display apparatus 100 may determine the location information for the particular channel information displaying event accordingly.

The aforementioned methods of controlling the display apparatus 100 and the server 200 may be coded, at least in part, as software and stored in a non-transitory readable medium. Such non-transitory readable medium may be used by being mounted to various apparatuses.

The non-transitory readable medium refers to a medium which may store data semi-permanently rather than storing data for a short time such as a register, a cache, and a memory and may be readable by an apparatus. Specifically, the above-described various applications and programs may be stored in the non- transitory readable medium like a compact disc (CD), a digital versatile disk (DVD), a hard disk, a Blu-ray disk, a universal serial bus (USB), a memory card, and a read-only memory (ROM), etc., and provided therein. Furthermore, it is understood that one or more of the above-described elements and components may include circuitry, at least one processor, memory, and other hardware.

As provided above, although a few exemplary embodiments have been shown and described, the present disclosure is not limited to the aforementioned particular exemplary embodiments, and could be variously modified and achieved by those skilled in the art to which the present disclosure pertains without deviating from the substance of the present disclosure which is claimed in the claims, and such modifications should not be understood separately from the technical concept or prospect of the present disclosure.

## Claims

1. A method of controlling a display apparatus (100), the method comprising:
transmitting, to a server (200), a request signal for requesting information on a display location of channel information;
receiving, from the server, the information on the display location of the channel information corresponding to the request signal; and
extracting, based on the information on the display location of the channel information, the channel information from a screen displayed by the display apparatus.

2. The method as claimed in claim 1, wherein:
the request signal comprises information on a type of a broadcast receiving apparatus (300) connected to the display apparatus (100); and
the information on the display location comprises coordinate value information for showing the display location of the channel information.

3. The method as claimed in claim 1 or claim 2, wherein:
the transmitting comprises transmitting the request signal in response to a channel information displaying event occurring; and
the channel information displaying event is at least one of a channel changing event, a power-on event of the display apparatus (100), an external apparatus connecting event, and a user request receiving event for displaying the channel information.

4. The method as claimed in any one of claims 1 to 3, further comprising:
in response to the channel information not being extracted, capturing the screen displayed by the display apparatus (100); and
transmitting the captured screen to the server (200).

5. The method as claimed in any one of claims 1 to 4, wherein the channel information comprises at least one of channel number information on a channel displayed by the display apparatus (100), information on a broadcast company which transmits a content regarding the channel, and a name of the content.

6. The method as claimed in any one of claims 1 to 5, further comprising:
storing the information on the display location of the received channel information.

7. A display apparatus (100) comprising:
a display (110) configured to display a broadcast content;
a communication unit (130) configured to communicate with a server (200); and
a controller (120) configured to control the communication unit to transmit, to the server, a request signal for requesting information on a display location of channel information, the communication unit being configured to receive, from the server, the information on the display location of the channel information corresponding to the request signal, and to extract, based on the information on the display location of the channel information, the channel information from a screen displayed by the display.

8. The apparatus (100) as claimed in claim 7, wherein:
the request signal comprises information on a type of a broadcast receiving apparatus (300) connected to the display apparatus; and
the information on the display location comprises coordinate value information for showing the display location of the channel information.

9. The apparatus (100) as claimed in claim 7 or claim 8, further comprising:
a user input unit,
wherein the controller (120) controls the communication unit (130) to transmit the request signal in response to a channel information displaying event occurring, and
wherein the channel information displaying event is at least one of a channel changing event, a power-on event of the display apparatus, an external apparatus connecting event, and a user request receiving event for displaying the channel information.

10. The apparatus (100) as claimed in any one of claims 7 to 9, wherein in response to the channel information not being extracted, the controller (120) controls the communication unit (130)to capture the screen displayed by the display apparatus and to transmit the captured screen to the server (200).

11. The apparatus (100) as claimed in any one of claims 7 to 10, wherein the channel information comprises at least one of channel number information on a channel displayed by the display apparatus, information on a broadcast company which transmits a content regarding the channel, and a name of the content.

12. The apparatus (100) as claimed in any one of claims 7 to 11, further comprising:
a storage configured to store the information on the display location of the received channel information.

13. A method of controlling a server (200), the method comprising:
receiving, from a display apparatus (100), a request signal for requesting information on a display location of channel information;
analyzing the request signal and transmitting, to the display apparatus, the information on the display location of the channel information according to an analysis.

14. The method as claimed in claim 13, further comprising:
receiving a captured display screen from the display apparatus (100); and
analyzing the received screen, determining the display location of the channel information, and updating the information on the display location of the channel information.

15. A server (200) comprising:
a communication unit (210);
a storage (220); and
a controller (230) configured to control the communication unit to receive, from a display apparatus (100), a request signal for requesting information on a display location of channel information, to analyze the request signal, to control the storage to store an analysis result of the request signal, and to control the communication unit to transmit, to the display apparatus, the information on the display location of the channel information according to the analysis.
